# EUROPEAN PATENT APPLICATION

(11) **EP 3 540 669 A1**
(43) Date of publication of application: **18.09.2019**
(21) Application number: 16922952.3
(22) Date of filing: 30.11.2016
(51) Int. Cl.: G06Q 20/16

(54) **TRANSACTION PROCESSING METHOD AND DEVICE**

(71) Applicant: Huawei Technologies Co., Ltd., Longgang District Shenzhen, Guangdong 518129 (CN)
(72) Inventor: MEI, Jingqing, Shenzhen, Guangdong 518129 (CN); LI, Guoqing, Shenzhen, Guangdong 518129 (CN)
(74) Representative: Maiwald Patent- und Rechtsanwaltsgesellschaft mbH
(86) International application number: PCT/CN2016/108054
(87) International publication number: WO 2018/098699

(57) **Abstract**

This application provides a transaction processing method and an apparatus. A server receives a transaction request message of a pending transaction user card sent by a first terminal, and if determining that PIN verification for the pending transaction user card fails, determines whether the server receives a first message of a second terminal. The first message is a PIN-free request message or a transaction response message. If receiving the first message of the second terminal, the server permits, based on the first message of the second terminal, the pending transaction user card to be used for transaction. It may be learned that, in this application, if determining that the PIN verification for the pending transaction user card fails, the server may perform a PIN-free transaction on the pending transaction user card based on the first message of the second terminal. Therefore, when performing a transaction by using a user card, a user can complete the transaction even if the user cannot enter a correct PIN, and this reduces memory burden of remembering a PIN by the user, and effectively prevents the PIN from being peeped and stolen.

## Description

### TECHNICAL FIELD

This application relates to the field of communications technologies, and in particular, to a transaction processing method and an apparatus.

### BACKGROUND

With the continuous development of science and technology, a transaction manner based on card swiping becomes popular. When using a bank card to perform a payment transaction, a user needs to swipe the card on a POS (Point of Sale, point of sale) terminal. In an existing bank card processing procedure, a user needs to enter a PIN (personal identification number, personal identification number) for online verification. Specifically, in a user verification step, if user verification manners supported by the bank card and the POS terminal both include online PIN verification, the POS terminal requests the user to enter a PIN by using a keyboard of the POS terminal. In a subsequent online processing step, the POS terminal adds an encrypted PAN (primary account number, primary account number) and PIN into an online authorization request packet, and submits the packet to a card issuing bank server for verification processing. After receiving the online authorization request packet, the card issuing bank server obtains the PAN and the PIN included in the online authorization request packet, and compares the PIN in the online authorization request packet with a PIN that is stored in the card issuing bank server and that is corresponding to the PAN. Verification succeeds if the PIN in the online authorization request packet is the same as the PIN that is stored in the card issuing bank server and that is corresponding to the PAN.

However, in the foregoing PIN-based card swiping manner, verification can succeed only when the user enters a correct PIN. Consequently, additional memory burden of the user is increased. Particularly, when the user has a plurality of bank cards and PINs corresponding to the bank cards are different, the memory burden becomes heavier.

### SUMMARY

This application provides a transaction processing method and an apparatus, to resolve the following prior-art technical problem: A user needs to enter a PIN in a process of performing a transaction by using a user card, and consequently memory burden of the user is increased.

This application provides a transaction processing method, including:
receiving, by a server, a transaction request message of a pending transaction user card sent by a first terminal;
if determining that personal identification number PIN verification for the pending transaction user card fails, determining, by the server, whether the server receives a first message of a second terminal, where the first message is a PIN-free request message or a transaction response message; and
if receiving the first message of the second terminal, permitting, by the server based on the first message of the second terminal, the pending transaction user card to be used for transaction.

In this way, the server may perform a PIN-free transaction on the pending transaction user card based on the first message of the second terminal. Therefore, when performing a transaction by using a user card, a user can complete the transaction even if the user cannot enter a correct PIN, and this reduces memory burden of remembering a PIN by the user, and effectively prevents the PIN from being peeped and stolen.

Optionally, the transaction request message includes identification information of the pending transaction user card and a PIN of the pending transaction user card entered by a user.

The determining, by the server, that PIN verification for the pending transaction user card fails includes:
obtaining, by the server based on the identification information of the pending transaction user card, a prestored target PIN corresponding to the identification information of the pending transaction user card; and
comparing, by the server, the PIN in the transaction request message with the target PIN, and if the PIN is different from the target PIN, determining that the PIN verification for the pending transaction user card fails.

In this way, the server compares the PIN of the pending transaction user card entered by the user with the target PIN, to determine whether the PIN verification fails.

Optionally, the determining, by the server, that PIN verification for the pending transaction user card fails includes:
determining, by the server, that the transaction request message does not include a PIN of the pending transaction user card.

In this way, when the user does not enter the PIN of the pending transaction user card, the server directly determines that the PIN verification fails.

Optionally, the permitting, by the server based on the first message of the second terminal, the pending transaction user card to be used for transaction specifically includes:
setting, by the server, the pending transaction user card to a PIN-free user card based on the first message of the second terminal, to permit the pending transaction user card to be used for transaction.

Optionally, the first message is a PIN-free service request message.

The setting, by the server, the pending transaction user card to a PIN-free user card based on the first message of the second terminal specifically includes:
receiving, by the server, a PIN-free service request message sent by the second terminal, where the PIN-free service request message includes the identification information of the pending transaction user card and identification information of the second terminal;
obtaining, by the server from registration information based on the identification information of the pending transaction user card, identification information that is of a second terminal and that is corresponding to the identification information of the pending transaction user card; and
setting, by the server, the pending transaction user card to a PIN-free user card after determining that the identification information of the second terminal in the PIN-free service request message is the same as the identification information that is of a second terminal and that is corresponding to the identification information of the pending transaction user card.

In this way, the server compares content in the PIN-free service request message sent by the second terminal with that in the registration information, and sets the pending transaction user card to a PIN-free user card after determining that the content in the PIN-free service request message sent by the second terminal is the same as that in the registration information. Therefore, when the user subsequently performs a transaction, even if the PIN verification fails, the server can permit, when determining that the pending transaction user card is set to a PIN-free user card, the pending transaction user card to be used for transaction, so that the user does not need to remember a PIN, and memory burden of the user is reduced. Alternatively, because the server has set the pending transaction user card to a PIN-free user card, regardless of whether the PIN verification succeeds, the server permits the pending transaction user card to be used for transaction. Therefore, after receiving the transaction request message sent by the first terminal, the server may directly determine whether the pending transaction user card is a PIN-free user card. If the pending transaction user card is a PIN-free user card, the server permits the pending transaction user card to be used for transaction, and no longer performs PIN verification. This can effectively save processing resources and improve transaction efficiency.

Optionally, the first message is a permit transaction response message.

The setting, by the server, the pending transaction user card to a PIN-free user card based on the first message of the second terminal specifically includes:
after determining that the PIN verification for the pending transaction user card fails, sending, by the server, a transaction confirmation message to the second terminal after determining, based on the identification information of the pending transaction user card included in the transaction request message, that a second terminal corresponding to the identification information of the pending transaction user card exists in registration information;
receiving, by the server, a permit transaction response message sent by the second terminal based on the transaction confirmation message; and
setting, by the server, the pending transaction user card to a PIN-free user card based on the permit transaction response message.

In this way, after determining that the PIN verification fails, the server sends the transaction confirmation message to the second terminal, and sets the pending transaction user card to a PIN-free user card after receiving the permit transaction response message, to permit the pending transaction user card to be used for transaction. Therefore, a transaction is performed through dynamic verification by using the second terminal, so that the user does not need to remember a PIN, and memory burden of the user is reduced.

Optionally, before the setting, by the server, the pending transaction user card to a PIN-free user card based on the first message of the second terminal, the method further includes:
receiving, by the server, a PIN-free registration request message sent by the second terminal, where the PIN-free registration request message includes the identification information of the pending transaction user card and the identification information of the second terminal; and
determining, by the server, the identification information of the pending transaction user card and the identification information of the second terminal as the registration information of the pending transaction user card, and returning a registration success response message to the second terminal.

In this way, in the foregoing registration process, the identification information of the pending transaction user card and the identification information of the second terminal are determined as the registration information. This provides a basis for subsequently performing a PIN-free transaction by using the pending transaction user card.

Optionally, the PIN-free registration request message further includes verification information.

Before the determining, by the server, the identification information of the pending transaction user card and the identification information of the second terminal as the registration information of the pending transaction user card, the method further includes:
determining, by the server based on the identification information of the pending transaction user card, that verification for the verification information succeeds.

In this way, verifying the verification information in the registration process may further improve registration security and effectively avoid malicious registration.

Optionally, after the setting, by the server, the pending transaction user card to a PIN-free user card based on the first message of the second terminal, the method further includes:
sending, by the server, a PIN-free response message to the second terminal. The PIN-free service response message may include validity limitation information of a PIN-free transaction of the pending transaction user card, for example, a valid quantity, a valid time, and a valid merchant of the PIN-free transaction. The validity limitation information of the PIN-free transaction of the pending transaction user card means: after a PIN-free transaction function is enabled, the PIN-free transaction can be directly performed when the validity limitation information is met, without enabling the function again, so that user experience is improved.

Optionally, after the permitting, by the server, the pending transaction user card to be used for transaction, the method further includes:
receiving, by the server, a PIN-free disabling request message of the pending transaction user card sent by the second terminal; and
setting, by the server, the pending transaction user card as a non-PIN-free user card based on the PIN-free disabling request message.

In this way, after the server completes a transaction by using the pending transaction user card, the user may send the PIN-free disabling request message to the server by using the second terminal, to ensure security.

This application provides a transaction processing method, where the method includes:
sending, by a second terminal, a first message to a server, where the first message is used by the server to: if determining that personal identification number PIN verification for the pending transaction user card fails, permit, based on the first message, the pending transaction user card to be used for transaction; and
receiving, by the second terminal, a PIN-free service response message sent by the server, where the PIN-free service response message is used by the server to notify the second terminal that the pending transaction user card is set to a PIN-free user card.

In this way, the second terminal sends the first message to the server, so that the server can perform a PIN-free transaction on the pending transaction user card based on the first message of the second terminal. Therefore, when performing a transaction by using a user card, a user can complete the transaction even if the user cannot enter a correct PIN, and this reduces memory burden of remembering a PIN by the user, and effectively prevents the PIN from being peeped and stolen.

Further, the PIN-free service response message may include validity limitation information of a PIN-free transaction of the pending transaction user card, for example, a valid quantity, a valid time, and a valid merchant of the PIN-free transaction. The validity limitation information of the PIN-free transaction of the pending transaction user card means: after a PIN-free transaction function is enabled, the PIN-free transaction can be directly performed when the validity limitation information is met, without enabling the function again, so that user experience is improved. After receiving the PIN-free service response message, the second terminal may specifically notify, by using an image, sound, or the like, the user of information indicating that the PIN-free transaction function is successfully enabled and the validity limitation information of the PIN-free transaction.

Optionally, the first message is a permit transaction response message, and before the sending, by a second terminal, a first message to a server, the method further includes:
receiving, by the second terminal, a transaction confirmation message sent by the server after the server determines that the PIN verification for the pending transaction user card fails.

Optionally, the first message is a PIN-free service request message, the first message includes identification information of the pending transaction user card and identification information of the second terminal, and the first message is used by the server to set the pending transaction user card to a PIN-free user card based on the identification information of the pending transaction user card and the identification information of the second terminal, to permit the pending transaction user card to be used for transaction.

Optionally, before the sending, by a second terminal, a first message to a server, the method further includes:
sending, by the second terminal, a PIN-free registration request message to the server, where the PIN-free registration request message includes the identification information of the pending transaction user card and the identification information of the second terminal, and the registration request message is used by the server to: determine the identification information of the pending transaction user card and the identification information of the second terminal as registration information of the pending transaction user card, and return a registration success response message to the second terminal; and
receiving, by the second terminal, the registration success response message returned by the server based on the registration request message.

Optionally, the PIN-free service response message includes validity limitation information of a PIN-free transaction of the pending transaction user card.

Optionally, after the sending, by a second terminal, a first message to a server, the method further includes:
sending, by the second terminal, a PIN-free disabling request message of the pending transaction user card to the server, where the PIN-free disabling request message is used by the server to set the pending transaction user card as a non-PIN-free user card based on the PIN-free disabling request message.

In this way, the user may send the PIN-free disabling request message to the server by using the second terminal, to ensure security.

This application provides a server, where the server includes a transceiver module and a processing module.

The transceiver module is configured to receive a transaction request message of a pending transaction user card sent by a first terminal.

The processing module is configured to: if determining that personal identification number PIN verification for the pending transaction user card fails, determine whether a first message of a second terminal is received, where the first message is a PIN-free request message or a transaction response message; and if the first message of the second terminal is received, permit, based on the first message of the second terminal, the pending transaction user card to be used for transaction.

Optionally, the transaction request message includes identification information of the pending transaction user card and a PIN of the pending transaction user card entered by a user.

The processing module is specifically configured to:
obtain, based on the identification information of the pending transaction user card, a prestored target PIN corresponding to the identification information of the pending transaction user card; and
compare the PIN in the transaction request message with the target PIN, and if the PIN is different from the target PIN, determine that the PIN verification for the pending transaction user card fails.

Optionally, the processing module is specifically configured to:
if determining that the transaction request message does not include a PIN of the pending transaction user card, determine that the PIN verification for the pending transaction user card fails.

Optionally, the processing module is specifically configured to:
set the pending transaction user card to a PIN-free user card based on the first message of the second terminal, to permit the pending transaction user card to be used for transaction.

Optionally, the first message is a PIN-free service request message.

The transceiver module is further configured to:
receive a PIN-free service request message sent by the second terminal, where the PIN-free service request message includes the identification information of the pending transaction user card and identification information of the second terminal.

The processing module is further configured to:
obtain, from registration information based on the identification information of the pending transaction user card, identification information that is of a second terminal and that is corresponding to the identification information of the pending transaction user card; and set the pending transaction user card to a PIN-free user card after determining that the identification information of the second terminal in the PIN-free service request message is the same as the identification information that is of a second terminal and that is corresponding to the identification information of the pending transaction user card.

Optionally, the first message is a permit transaction response message.

The processing module is specifically configured to:
after determining that the personal identification number PIN verification for the pending transaction user card fails and determining, based on the identification information of the pending transaction user card included in the transaction request message, that a second terminal corresponding to the identification information of the pending transaction user card exists in registration information, send a transaction confirmation message to the second terminal by using the transceiver module;
receive, by using the transceiver module, a permit transaction response message sent by the second terminal based on the transaction confirmation message; and
set the pending transaction user card to a PIN-free user card based on the permit transaction response message.

Optionally, before setting the pending transaction user card to a PIN-free user card based on the first message of the second terminal, the processing module is further configured to:
receive, by using the transceiver module, a PIN-free registration request message sent by the second terminal, where the PIN-free registration request message includes the identification information of the pending transaction user card and the identification information of the second terminal; and
determine the identification information of the pending transaction user card and the identification information of the second terminal as the registration information of the pending transaction user card, and return a registration success response message to the second terminal by using the transceiver module.

Optionally, the PIN-free registration request message further includes verification information.

Before determining the identification information of the pending transaction user card and the identification information of the second terminal as the registration information of the pending transaction user card, the processing module is further configured to:
determine, based on the identification information of the pending transaction user card, that verification for the verification information succeeds.

Optionally, after the processing module permits the pending transaction user card to be used for transaction, the transceiver module is further configured to:
send a transaction response message to the first terminal and/or the second terminal, where the transaction response message includes a transaction result.

Optionally, the transceiver module is further configured to:
receive a PIN-free disabling request message of the pending transaction user card sent by the second terminal.

The processing module is further configured to:
set the pending transaction user card as a non-PIN-free user card based on the PIN-free disabling request message.

This application provides a terminal, where the terminal includes a transceiver module and a processing module.

The processing module is configured to: send a first message to a server by using the transceiver module, where the first message is used by the server to permit a pending transaction user card to be used for transaction; and receive, by using the transceiver module, a PIN-free service response message sent by the server, where the PIN-free service response message is used by the server to notify the second terminal that the pending transaction user card is set to a PIN-free user card.

Optionally, the first message is a permit transaction response message, and before sending the first message to the server, the transceiver module is further configured to:
receive a transaction confirmation message sent by the server after the server determines that PIN verification for the pending transaction user card fails.

Optionally, the first message is a PIN-free service request message, the first message includes identification information of the pending transaction user card and identification information of the second terminal, and the first message is used by the server to set the pending transaction user card to a PIN-free user card based on the identification information of the pending transaction user card and the identification information of the second terminal, to permit the pending transaction user card to be used for transaction.

Optionally, before sending the first message to the server, the transceiver module is further configured to:
send a PIN-free registration request message to the server, where the PIN-free registration request message includes verification information, the identification information of the pending transaction user card, and the identification information of the second terminal, and the registration request message is used by the server to: after determining, based on the identification information of the pending transaction user card, that verification for the verification information succeeds, determine the identification information of the pending transaction user card and the identification information of the second terminal as registration information of the pending transaction user card, and return a registration success response message to the second terminal; and
receive the registration success response message returned by the server based on the registration request message.

Optionally, the PIN-free service response message includes validity limitation information of a PIN-free transaction of the pending transaction user card.

Optionally, after sending the first message to the server, the transceiver module is further configured to:
send a PIN-free disabling request message of the pending transaction user card to the server, where the PIN-free disabling request message is used by the server to set the pending transaction user card as a non-PIN-free user card based on the PIN-free disabling request message.

This application provides another server, where the server includes a communications interface and a processor.

The communications interface is configured to receive a transaction request message of a pending transaction user card sent by a first terminal.

The processor is configured to: if determining that personal identification number PIN verification for the pending transaction user card fails, determine whether a first message of a second terminal is received, where the first message is a PIN-free service request message or a permit transaction response message; and if the first message of the second terminal is received, permit, based on the first message of the second terminal, the pending transaction user card to be used for transaction.

Optionally, the transaction request message includes identification information of the pending transaction user card and a PIN of the pending transaction user card entered by a user.

The processor is specifically configured to:
obtain, based on the identification information of the pending transaction user card, a prestored target PIN corresponding to the identification information of the pending transaction user card; and
compare the PIN in the transaction request message with the target PIN, and if the PIN is different from the target PIN, determine that the PIN verification for the pending transaction user card fails.

Optionally, the processor is specifically configured to:
if determining that the transaction request message does not include a PIN of the pending transaction user card, determine that the PIN verification for the pending transaction user card fails.

Optionally, the processor is specifically configured to:
set the pending transaction user card to a PIN-free user card based on the first message of the second terminal, to permit the pending transaction user card to be used for transaction.

Optionally, the first message is a PIN-free service request message.

The communications interface is further configured to:
receive a PIN-free service request message sent by the second terminal, where the PIN-free service request message includes the identification information of the pending transaction user card and identification information of the second terminal.

The processor is further configured to:
obtain, from registration information based on the identification information of the pending transaction user card, identification information that is of a second terminal and that is corresponding to the identification information of the pending transaction user card; and set the pending transaction user card to a PIN-free user card after determining that the identification information of the second terminal in the PIN-free service request message is the same as the identification information that is of a second terminal and that is corresponding to the identification information of the pending transaction user card.

Optionally, the first message is a permit transaction response message.

The processor is specifically configured to:
after determining that the personal identification number PIN verification for the pending transaction user card fails and determining, based on the identification information of the pending transaction user card included in the transaction request message, that a second terminal corresponding to the identification information of the pending transaction user card exists in registration information, send a transaction confirmation message to the second terminal by using the communications interface;
receive, by using the communications interface, a permit transaction response message sent by the second terminal based on the transaction confirmation message; and
set the pending transaction user card to a PIN-free user card based on the permit transaction response message.

Optionally, before setting the pending transaction user card to a PIN-free user card based on the first message of the second terminal, the processor is further configured to:
receive, by using the communications interface, a PIN-free registration request message sent by the second terminal, where the PIN-free registration request message includes the identification information of the pending transaction user card and the identification information of the second terminal; and
determine the identification information of the pending transaction user card and the identification information of the second terminal as the registration information of the pending transaction user card, and return a registration success response message to the second terminal by using the communications interface.

Optionally, the PIN-free registration request message further includes verification information.

Before determining the identification information of the pending transaction user card and the identification information of the second terminal as the registration information of the pending transaction user card, the processor is further configured to:
determine, based on the identification information of the pending transaction user card, that verification for the verification information succeeds.

Optionally, the communications interface is further configured to:
receive a PIN-free disabling request message of the pending transaction user card sent by the second terminal.

The processor is further configured to:
set the pending transaction user card as a non-PIN-free user card based on the PIN-free disabling request message.

This application provides another terminal, where the terminal includes a communications interface and a processor.

The processor is configured to: send a first message to a server by using the communications interface, where the first message is used by the server to permit, based on the first message, a pending transaction user card to be used for transaction; and receive, by using the communications interface, a PIN-free service response message sent by the server, where the PIN-free service response message is used by the server to notify the second terminal that the pending transaction user card is set to a PIN-free user card.

Optionally, the first message is a permit transaction response message, and before sending the first message to the server, the communications interface is further configured to:
receive a transaction confirmation message sent by the server after the server determines that PIN verification for the pending transaction user card fails.

Optionally, the first message is a PIN-free service request message, the first message includes identification information of the pending transaction user card and identification information of the second terminal, and the first message is used by the server to set the pending transaction user card to a PIN-free user card based on the identification information of the pending transaction user card and the identification information of the second terminal.

Optionally, before sending the first message to the server, the communications interface is further configured to:
send a PIN-free registration request message to the server, where the PIN-free registration request message includes verification information, the identification information of the pending transaction user card, and the identification information of the second terminal, and the registration request message is used by the server to: after determining, based on the identification information of the pending transaction user card, that verification for the verification information succeeds, determine the identification information of the pending transaction user card and the identification information of the second terminal as registration information of the pending transaction user card, and return a registration success response message to the second terminal; and
receive the registration success response message returned by the server based on the registration request message.

Optionally, the PIN-free service response message includes validity limitation information of a PIN-free transaction of the pending transaction user card.

Optionally, after sending the first message to the server, the communications interface is further configured to:
send a PIN-free disabling request message of the pending transaction user card to the server, where the PIN-free disabling request message is used by the server to set the pending transaction user card as a non-PIN-free user card based on the PIN-free disabling request message.

In this application, the server receives the transaction request message of the pending transaction user card sent by the first terminal, and if determining that the PIN verification for the pending transaction user card fails, determines whether the server receives the first message of the second terminal. The first message is a PIN-free request message or a transaction response message. If receiving the first message of the second terminal, the server permits, based on the first message of the second terminal, the pending transaction user card to be used for transaction. It may be learned that, in this application, if determining that the PIN verification for the pending transaction user card fails, the server may determine whether the server receives the first message of the second terminal, and perform a PIN-free transaction on the pending transaction user card after receiving the first message of the second terminal. Therefore, when performing a transaction by using a user card, the user can complete the transaction even if the user cannot enter a correct PIN, and this reduces memory burden of remembering a PIN by the user, and effectively prevents the PIN from being peeped and stolen.

### BRIEF DESCRIPTION OF DRAWINGS

To describe the technical solutions in this application more clearly, the following briefly describes the accompanying drawings required for describing the embodiments. Apparently, the accompanying drawings in the following description show only some embodiments of this application.
FIG. 1 is a schematic diagram of a system architecture applicable to this application;
FIG. 2A and FIG. 2B are a schematic diagram of a procedure corresponding to a transaction processing method according to this application;
FIG. 3 is a schematic diagram of an entire procedure corresponding to a transaction processing method according to Embodiment 1 of this application;
FIG. 4 is a schematic diagram of an entire procedure corresponding to a transaction processing method according to Embodiment 2 of this application;
FIG. 5 is a representation diagram of an example of a transaction confirmation message received by a mobile terminal according to this application;
FIG. 6 is a schematic structural diagram of a server according to this application;
FIG. 7 is a schematic structural diagram of a terminal according to this application;
FIG. 8 is a schematic structural diagram of another server according to this application; and
FIG. 9 is a schematic structural diagram of another terminal according to this application.

### DESCRIPTION OF EMBODIMENTS

To make the objectives, technical solutions, and advantages of this application clearer, the following further describes this application in detail with reference to the accompanying drawings. Apparently, the described embodiments are only some rather than all of the embodiments of this application. All other embodiments obtained by persons of ordinary skill in the art based on the embodiments of this application without creative efforts shall fall within the protection scope of this application.

In the specification, claims, and accompanying drawings of this application, the terms "first", "second", and the like are intended to distinguish between different objects but do not indicate a particular order. In addition, the terms "include", "have", or any other variant thereof are intended to cover the non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

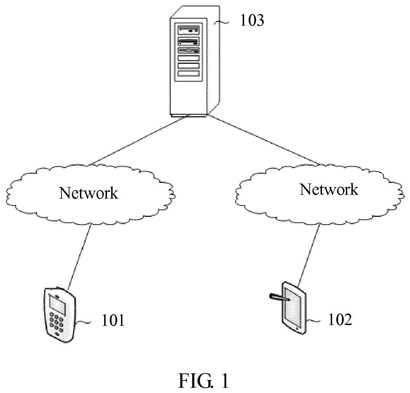

FIG. 1 is a schematic diagram of a system architecture applicable to this application. As shown in FIG. 1, the system architecture includes a first terminal 101, a second terminal 102, and a server 103. Both the first terminal 101 and the second terminal 102 may communicate with the server 103 by using a network (for example, a wireless network).

The first terminal 101 is a terminal that can perform a card swiping operation, for example, a POS terminal or a mobile phone with card swiping and acquiring functions. Card swiping means that a transaction (for example, a payment transaction) is completed by swiping a user card. The user card may be a bank card (for example, a deposit card or a credit card) or a consumer card. Identification information of the user card is stored in the user card. The identification information may uniquely identify the user card in a transaction process. The identification information of the user card may be a PAN of the user card. The POS terminal is a multifunctional terminal. The POS terminal is installed at a special merchant and an outlet of a credit card to network with a computer, to implement automatic electronic funds transfer. The POS terminal has a function of supporting consumption, pre-authorization, balance query, transfer, and the like, and can be used securely, quickly, and reliably.

In this application, the first terminal 101 is configured to perform a card swiping operation, and sends a transaction request message to the server 103.

The second terminal 102 may be a mobile terminal. The mobile terminal may be a handheld device with a wireless connection function, another processing device connected to a wireless modem, or a terminal that communicates with one or more core networks by using a radio access network. For example, the mobile terminal may be a mobile telephone, a tablet computer, a mobile Internet device (mobile Internet device, MID for short), a wearable device, or the like. For another example, the mobile terminal may be a portable, pocket-sized, handheld, computer built-in, or in-vehicle mobile device. For another example, the mobile terminal may be a part of user equipment (user equipment, UE for short).

In this application, the second terminal 102 is configured to: send a PIN-free registration request message of the user card to the server 103, and after determining that registration succeeds, send a first message to the server, so that the server sets the user card to a PIN-free user card based on the first message.

The server 103 may be a server that performs transaction verification, for example, a card issuing bank server.

Some technical solutions of this application may be specifically implemented based on the system architecture shown in the example in FIG. 1 or a variant of the system architecture.

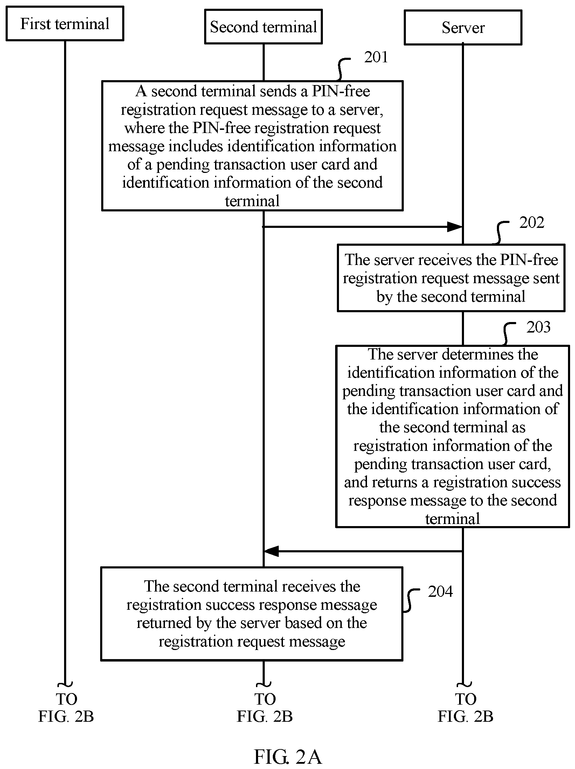

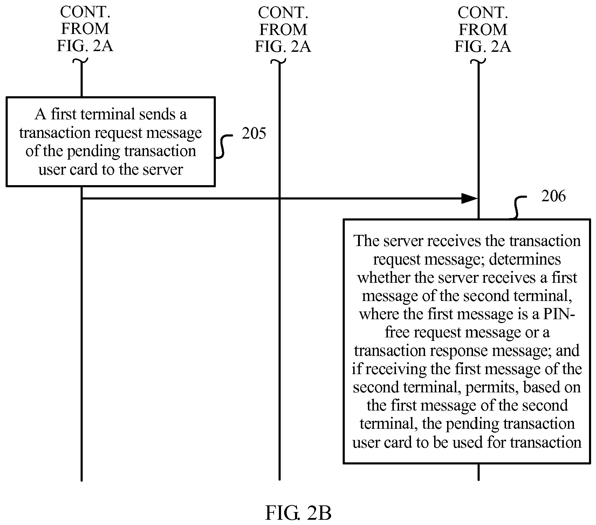

FIG. 2A and FIG. 2B are a schematic diagram of a procedure corresponding to a transaction processing method according to an example of this application. As shown in FIG. 2A and FIG. 2B, the method includes the following steps:
Step 201. A second terminal sends a PIN-free registration request message to a server, where the PIN-free registration request message includes identification information of a pending transaction user card and identification information of the second terminal.
Step 202. The server receives the PIN-free registration request message sent by the second terminal.
Step 203. The server determines the identification information of the pending transaction user card and the identification information of the second terminal as registration information of the pending transaction user card, and returns a registration success response message to the second terminal.
Step 204. The second terminal receives the registration success response message returned by the server based on the registration request message.
Step 205. A first terminal sends a transaction request message of the pending transaction user card to the server.
Step 206. The server receives the transaction request message; if determining that personal identification number PIN verification for the pending transaction user card fails, determines whether the server receives a first message of the second terminal, where the first message is a PIN-free request message or a transaction response message; and if receiving the first message of the second terminal, permits, based on the first message of the second terminal, the pending transaction user card to be used for transaction.

It may be learned that, in this application, if determining that the PIN verification for the pending transaction user card fails, the server may determine whether the server receives the first message of the second terminal, and perform a PIN-free transaction on the pending transaction user card after receiving the first message of the second terminal. Therefore, when performing a transaction by using a user card, a user can complete the transaction even if the user cannot enter a correct PIN, and this reduces memory burden of remembering a PIN by the user, and effectively prevents the PIN from being peeped and stolen.

Specifically, in step 201, the PIN-free registration request message may further include verification information. The verification information may be information (for example, an online transaction password, a service password, a PIN, or an electronic token) that is agreed on in advance between a user of the pending transaction user card and a card issuing bank. Alternatively, the verification information may be information (for example, SMS verification code or a bank password card) that is used for verification and that is provided by a card issuing bank for a user of the pending transaction user card. Alternatively, the verification information may be information (for example, a USB key) that is used for verification and that is obtained through processing of a device provided by a card issuing bank for a user of the pending transaction user card.

Correspondingly, in step 202 and step 203, after receiving the PIN-free registration request message, the server needs to verify the verification information in the PIN-free registration request message. An example in which the verification information is an online transaction password is used. The server obtains, based on the identification information of the pending transaction user card, a prestored target online transaction password corresponding to the identification information of the pending transaction user card, and compares the target online transaction password with the online transaction password in the PIN-free registration request message. If the target online transaction password is the same as the online transaction password in the PIN-free registration request message, the server may determine that verification for the verification information succeeds. Then, the server determines the identification information of the pending transaction user card and the identification information of the second terminal as the registration information of the pending transaction user card, stores the registration information, and returns the registration success response message to the second terminal. If the online transaction password in the PIN-free registration request message is different from the target online transaction password, the server determines that verification for the verification information fails. In this case, the server may return a registration failure response message to the second terminal. Further, the response message may include a specific registration failure reason (for example, the verification for the verification information fails).

Further, the server may store identification information of a pending transaction user card and identification information of a mobile terminal in a plurality of manners. For example, the server may store related registration information of all successfully registered user cards in a table. As shown in Table 1, Table 1 illustrates the registration information stored in the server.

**Table 1: Registration information illustration**

| **Identification information of a user card** | **Corresponding identification information of a mobile terminal** |
|---|---|
| 1234567890 | a |
| 2345678901 | b |
| 3456789012 | c |
| ... | ... |

It should be noted that, step 201 to step 204 is a PIN-free registration process of the pending transaction user card, and PIN-free registration can be completed after step 201 to step 204. However, in this case, the pending transaction user card is not a PIN-free user card. In other words, the pending transaction user card still cannot be used to perform a PIN-free transaction. In this application, to ensure security, the PIN-free transaction can be performed only when a PIN-free function is enabled before the transaction.

In step 205, when the user uses the pending transaction user card to perform a transaction through card swiping, the first terminal reads the identification information of the pending transaction user card, and displays, to the user, an interface for entering a PIN of the pending transaction user card. If the user enters the PIN of the pending transaction user card and taps a confirmation key, the first terminal generates the transaction request message based on the PIN entered by the user, the identification information of the pending transaction user card, a transaction amount, a payment manner, and the like, and sends the transaction request message to the server. If the user directly taps a confirmation key without entering the PIN of the pending transaction user card, the first terminal generates the transaction request message based on the identification information of the pending transaction user card, a transaction amount, a payment manner, and the like, and sends the transaction request message to the server.

In step 206, because the transaction request message sent by the first terminal may include or may not include the PIN of the pending transaction user card, there may be two cases in which the server determines that the PIN verification for the pending transaction user card fails. The two cases are separately described below in detail.

Case 1: The transaction request message includes the PIN of the pending transaction user card.

The server obtains, based on the identification information of the pending transaction user card, a prestored target PIN corresponding to the identification information of the pending transaction user card, and compares the PIN in the transaction request message with the target PIN. If the PIN in the transaction request message is different from the target PIN, the server may determine that the PIN verification for the pending transaction user card fails. If the PIN in the transaction request message is the same as the target PIN, the server may determine that the PIN verification for the pending transaction user card succeeds. In this case, the server may permit the pending transaction user card to be used for transaction.

Case 2: The transaction request message does not include the PIN of the pending transaction user card.

After determining that the transaction request message does not include the PIN of the pending transaction user card, the server may directly determine that the PIN verification for the pending transaction user card fails.

A specific process in which the server sets the pending transaction user card to a PIN-free user card based on the first message of the second terminal in this application is described below. The first message of the second terminal may be a PIN-free service request message or a permit transaction response message.
(1). The first message of the second terminal is a PIN-free service request message.

In this case, after step 204, if the user wants to enable a PIN-free transaction function of the pending transaction user card, the user may send a PIN-free service request message to the server by using the second terminal. The PIN-free service request message includes the identification information of the pending transaction user card and the identification information of the second terminal. Correspondingly, after receiving the PIN-free service request message, the server obtains, from the registration information based on the identification information of the pending transaction user card, identification information that is of a second terminal and that is corresponding to the identification information of the pending transaction user card, and compares the identification information of the second terminal in the PIN-free service request message with the identification information that is of a second terminal and that is corresponding to the identification information of the pending transaction user card. If the identification information of the second terminal in the PIN-free service request message is the same as the identification information that is of a second terminal and that is corresponding to the identification information of the pending transaction user card, the server may set the pending transaction user card to a PIN-free user card.

It should be noted that, the second terminal may send the PIN-free service request message to the server before the first terminal sends the transaction request message to the server. In this case, the server may set the pending transaction user card to a PIN-free user card before receiving the transaction request message.

The second terminal may send the PIN-free service request message to the server at a time point the same as a time point at which the first terminal sends the transaction request message to the server. Alternatively, the second terminal may send the PIN-free service request message to the server at a time point slightly later than a time point at which the first terminal sends the transaction request message to the server. In the two cases, after determining that the verification for the PIN in the transaction request message fails, if determining that the server receives the PIN-free service request message, the server may also set the pending transaction user card to a PIN-free user card based on the PIN-free service request message, to permit the pending transaction user card to be used for transaction.

In other words, a sequence of the time point at which the second terminal sends the PIN-free service request message to the server and the time point at which the first terminal sends the transaction request message to the server is not specifically limited in this application, provided that the server can receive the PIN-free service request message before sending a transaction response message based on the transaction request message.

After the server completes a transaction by using the pending transaction user card, the user may send a PIN-free disabling request message to the server by using the second terminal, to ensure security. Specifically, the PIN-free disabling request message sent by the second terminal may include the identification information of the pending transaction user card. After receiving the PIN-free disabling request message, the server sets the pending transaction user card as a non-PIN-free user card based on the identification information of the pending transaction user card.

In this application, a specific manner in which the server sets the pending transaction user card to a PIN-free user card may be as follows: The server sets a PIN-free tag for the pending transaction user card. In this case, in step 206, if determining, based on the identification information of the pending transaction user card, that a PIN-free tag exists, the server may determine that the pending transaction user card is a PIN-free user card. Alternatively, the server maintains a PIN-free table. Identification information of all PIN-free user cards is stored in the PIN-free table. After setting the pending transaction user card to a PIN-free user card, the server may add the identification information of the pending transaction user card into the PIN-free table. In this case, in step 206, the server may compare the identification information of the pending transaction user card with the identification information in the PIN-free table. If identification information that is the same as the identification information of the pending transaction user card exists in the table, the server may determine that the pending transaction user card is a PIN-free user card.

Correspondingly, a specific manner in which the server sets the pending transaction user card as a non-PIN-free user card may be as follows: The server deletes the PIN-free tag of the pending transaction user card, or deletes the identification information of the pending transaction user card from the PIN-free table.

(2). The first message of the second terminal is a permit transaction response message.

In this case, after determining that the PIN verification for the pending transaction user card fails, the server may query, based on the identification information of the pending transaction user card in the transaction request message, whether a second terminal corresponding to the identification information of the pending transaction user card exists in the registration information. If the second terminal corresponding to the identification information of the pending transaction user card exists in the registration information, the server sends a transaction confirmation message to the second terminal. Otherwise, the server may directly determine that a transaction fails.

Specifically, that the server queries whether a second terminal corresponding to the identification information of the pending transaction user card exists in the registration information means that the server queries whether identification information that is of a second terminal and that is corresponding to the identification information of the pending transaction user card exists in the registration information. If the identification information that is of a second terminal and that is corresponding to the identification information of the pending transaction user card exists in the registration information, the server sends the transaction confirmation message to the second terminal based on the identification information of the second terminal. The transaction confirmation message may include the identification information of the pending transaction user card and a transaction amount, and may further include information such as a transaction time point, a transaction place, and an acquiring merchant name. In this embodiment of the present invention, before the server queries, based on the identification information of the pending transaction user card in the transaction request message, whether a second terminal corresponding to the identification information of the pending transaction user card exists in the registration information, the method may further include: determining, by the server, that no identification information that is the same as the identification information of the pending transaction user card exists in a PIN-free table.

Correspondingly, after receiving the transaction confirmation message, the second terminal displays the transaction confirmation message to the user. If determining to permit a transaction, the user may send a permit transaction response message to the server by using the second terminal. The permit transaction response message may include the identification information of the pending transaction user card and a confirmation result. After receiving the permit transaction response message, the server may determine that the pending transaction user card is a PIN-free user card, and permit the pending transaction user card to be used for transaction.

If the user disallows a transaction, the user may send a disallow transaction response message to the server by using the second terminal. After receiving the disallow transaction response message, the server may determine that the transaction fails. Alternatively, if the user disallows a transaction, the second terminal may send no response message, and if receiving no response message within a specified time period (for example, one minute), the server may directly determine that the transaction fails.

Further, the permit transaction response message may further include the identification information of the second terminal. In this case, the server may verify, based on the identification information of the second terminal, whether the second terminal is authorized. For example, the server may verify whether the identification information of the second terminal included in the permit transaction response message is the identification information that is of a second terminal and that is corresponding to the identification information of the pending transaction user card, to further avoid a transaction risk caused when the server receives a permit transaction response message sent by an unauthorized second terminal and performs a transaction.

It should be noted that, in this application, after receiving the transaction confirmation message, the second terminal may directly determine, based on the identification information of the pending transaction user card in the transaction confirmation message and a preset PIN-free policy of the pending transaction user card, whether to permit a transaction. The preset PIN-free policy of the pending transaction user card may be a PIN-free transaction type or a PIN-free transaction limitation condition that is preset by the user in the mobile terminal for the pending transaction user card. For example, the preset PIN-free policy of the pending transaction user card is that a transaction amount is less than or equal to 500 yuan. In this case, if the transaction amount in the transaction confirmation message received by the second terminal is 300 yuan, the second terminal may directly determine to permit a transaction, and send a permit transaction response message to the server. After the method is used, the user does not need to perform confirmation, so that additional operations of the user are reduced, and more convenience is brought to the user.

Further, after the server sets the pending transaction user card to a PIN-free user card based on the PIN-free service request message or the permit transaction response message, the method further includes: sending a PIN-free service response message to the second terminal. The PIN-free service response message may include validity limitation information of a PIN-free transaction of the pending transaction user card, for example, a valid quantity, a valid time, and a valid merchant of the PIN-free transaction. The validity limitation information of the PIN-free transaction of the pending transaction user card means: after a PIN-free transaction function is enabled, the PIN-free transaction can be directly performed when the validity limitation information is met, without enabling the function again. In this case, the validity limitation information of the PIN-free transaction of the pending transaction user card may be generated by the server. After receiving the PIN-free service response message, the second terminal may specifically notify, by using an image, sound, or the like, the user of information indicating that the PIN-free transaction function is successfully enabled and the validity limitation information of the PIN-free transaction.

In this application, the user may set the validity limitation information of the PIN-free transaction of the pending transaction user card. Specifically, after the user sets the validity limitation information of the PIN-free transaction, the second terminal may add the validity limitation information of the PIN-free transaction into the PIN-free service request message or the permit transaction response message, and send the PIN-free service request message or the permit transaction response message to the server. After setting the pending transaction user card to a PIN-free user card based on the PIN-free service request message or the permit transaction response message, the server determines whether the validity limitation information that is of the PIN-free transaction and that is set by the user is proper. If the validity limitation information is proper, the server sends a PIN-free service response message to the second terminal, to notify the user of information indicating that the PIN-free transaction function of the pending transaction user card is enabled and the validity limitation information. If the validity limitation information is improper, the server may modify the validity limitation information, and send a PIN-free service response message to the second terminal, to notify the user of information indicating that the PIN-free transaction function of the pending transaction user card is enabled and the modified validity limitation information. After the server prompts the user with the information indicating that the PIN-free function is enabled, and further notifies the user of the validity limitation information of the PIN-free transaction, the user can clearly learn whether a current PIN-free transaction function takes effect, thereby improving user experience.

A manner in which the server determines whether the validity limitation information that is of the PIN-free transaction and that is set by the user is proper may be as follows: The server presets a validity threshold for the pending transaction user card, for example, a transaction quantity threshold, a transaction time threshold, and a transaction white list merchant. Specifically, the transaction quantity threshold may be a quantity of PIN-free transactions permitted after the PIN-free function is enabled, for example, three or five. The transaction time threshold may be a time period in which the PIN-free transaction is permitted after the PIN-free function is enabled, for example, within two hours or 24 hours after the PIN-free function is enabled. Alternatively, the transaction time threshold may be one or several fixed time periods in each day. The transaction whitelist merchant may be a preset merchant permitted to perform a PIN-free transaction, and is usually a merchant with relatively high security. The server compares the validity limitation information (for example, the valid quantity, the valid time, and the valid merchant of the PIN-free transaction) that is set by the user with the validity threshold. If determining that the validity limitation information that is set by the user entirely meets the validity threshold, for example, the valid quantity of the PIN-free transaction is less than or equal to the transaction quantity threshold, the valid time meets the transaction time threshold, and the valid merchant is the transaction whitelist merchant, the server may determine that the validity limitation information that is of the PIN-free transaction and that is set by the user is proper. If determining that the validity limitation information that is set by the user does not entirely meet the validity threshold, for example, the valid quantity of the PIN-free transaction is greater than the transaction quantity threshold, and the valid time does not meet the transaction time threshold, the server may modify the valid quantity to the transaction quantity threshold, and modify the valid time to the transaction time threshold, to obtain the modified validity limitation information, and send the modified validity limitation information to the second terminal by using the PIN-free service response message. Alternatively, the server may directly determine that the validity limitation information that is set by the user is improper, and add, into the PIN-free service response message, information indicating that setting of the validity limitation information fails. Further, the server may further add the validity threshold into the PIN-free service response message, to notify the user of proper validity limitation information that should be set.

It should be noted that, the above-enumerated validity limitation information of the PIN-free transaction is only an example. In this application, the validity limitation information of the PIN-free transaction may include a plurality of types of limitation information. For example, the validity limitation information of the PIN-free transaction may further include an amount based on which the PIN-free transaction is permitted, and the like. Persons skilled in the art may determine, based on an actual situation, content that may be included in the validity limitation information of the PIN-free transaction. This is not specifically limited in this application.

Further, after determining that the validity limitation information of the PIN-free transaction of the pending transaction user card takes effect (for example, a quantity of PIN-free transactions performed by using the pending transaction user card has reached the transaction quantity in the validity limitation information), the server may send a notification message to the second terminal, to notify the user that the PIN-free transaction function of the pending transaction user card is disabled. If the user subsequently wants to perform a PIN-free transaction again by using the pending transaction user card, the user needs to enable the PIN-free transaction function again (for example, sends a PIN-free service request message to the server again by using the second terminal).

After the validity limitation information of the PIN-free transaction of the pending transaction user card is set, a security risk possibly faced by the user after the user enables the PIN-free transaction function can be reduced.

In the foregoing process, after determining that a transaction of the pending transaction user card succeeds or fails, the server may send a transaction response message to the first terminal and/or the second terminal. The transaction response message includes a transaction result, and the transaction result may be a transaction success result or a transaction failure result.

An example in which the first terminal is a POS terminal and the second terminal is a mobile terminal is used below, to describe this application with reference to a specific embodiment.

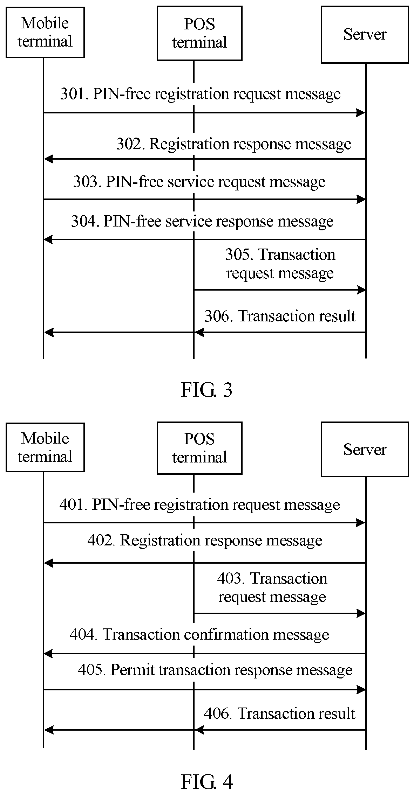

FIG. 3 is a schematic diagram of an entire procedure corresponding to a transaction processing method according to Embodiment 1 of this application. Specifically, an entire transaction processing procedure existing when a first message of a second terminal is a PIN-free service request message is shown.

Step 301. The mobile terminal sends a PIN-free registration request message to a server. The PIN-free registration request message includes an online transaction password, identification information of a pending transaction user card, and identification information of the mobile terminal. For example, the online transaction password is 123456, the identification information of the pending transaction user card is 1234567890, and the identification information of the mobile terminal is a.

Step 302. The server sends a registration response message to the mobile terminal based on the PIN-free registration request message. Specifically, after receiving the PIN-free registration request message, the server verifies the online transaction password. If determining that the online transaction password is correct, the server may correspondingly store the identification information "1234567890" of the pending transaction user card and the identification information "a" of the mobile terminal, and send a registration success response message to the mobile terminal.

Step 303. The mobile terminal sends a PIN-free service request message to the server. Specifically, after determining, based on the registration response message received by the mobile terminal, that registration succeeds, a user may enable a PIN-free service as required.

For example, when determining to perform a transaction through card swiping, the user may first send the PIN-free service request message to the server by using the mobile terminal. To be specific, the user enters the identification information "1234567890" of the pending transaction user card on the mobile terminal, and the mobile terminal generates the PIN-free service request message based on the entered identification information "1234567890" of the pending transaction user card and the identification information "a" of the mobile terminal, and sends the PIN-free service request message to the server. Alternatively, the mobile terminal may obtain the identification information of the pending transaction user card through NFC (Near Field Communication, Near Field Communication), and send the PIN-free service request message. If the pending transaction user card is a physical bank card, when the physical bank card and the mobile terminal are used to perform NFC Tap, the mobile terminal obtains a PAN from the physical bank card by sending an instruction (based on a PBOC/EMVCo contactless card protocol) through NFC, and sends the PIN-free service request message to the server based on the PAN and the identification information of the mobile terminal. Performing NFC Tap may simplify an operation in which the user chooses to enable a PIN-free transaction function for the PAN of the bank card, and optimize user operation experience.

Step 304. The server sends a PIN-free service response message to the second terminal. Specifically, after determining that the identification information "1234567890" of the pending transaction user card and the identification information "a" of the mobile terminal that are carried in the PIN-free service request message match content in the registration information, the server sets the pending transaction user card to a PIN-free user card, and sends the PIN-free service response message.

Step 305. A POS terminal sends a transaction request message to the server. Specifically, the user uses the pending transaction user card to perform a transaction through card swiping, and the POS terminal reads the identification information "1234567890" of the pending transaction user card, and prompts the user to enter a PIN. In this case, the user may randomly enter one to six digits as the PIN, or may enter no PIN. The POS terminal generates the transaction request message based on the identification information "1234567890" of the pending transaction user card and the PIN (if the user enters the PIN), and sends the transaction request message to the server.

Step 306. After determining, based on the transaction request message, that PIN verification for a pending transaction user card fails, if determining that the pending transaction user card is a PIN-free user card, the server may permit the pending transaction user card to be used for transaction, and send a transaction result to the mobile terminal and the POS terminal.

It should be noted that, after setting the pending transaction user card to a PIN-free user card, regardless of whether the PIN verification succeeds, the server permits the pending transaction user card to be used for transaction. Therefore, in step 306, the server may directly determine whether the pending transaction user card is a PIN-free user card. If the pending transaction user card is a PIN-free user card, the server permits the pending transaction user card to be used for transaction, and no longer performs PIN verification. This can effectively save processing resources and improve transaction efficiency.

FIG. 4 is a schematic diagram of an entire procedure corresponding to a transaction processing method according to Embodiment 2 of this application. Specifically, an entire transaction processing procedure existing when a first message of a second terminal is a permit transaction response message is shown.

Step 401. The mobile terminal sends a PIN-free registration request message to a server. The PIN-free registration request message includes an online transaction password, identification information of a pending transaction user card, and identification information of the mobile terminal. For example, the online transaction password is 123456, the identification information of the pending transaction user card is 1234567890, and the identification information of the mobile terminal is a. This is the same as that in step 301.

Step 402. The server sends a registration response message to the mobile terminal based on the PIN-free registration request message. After receiving the PIN-free registration request message, the server verifies the online transaction password. If determining that the online transaction password is correct, the server may correspondingly store the identification information "1234567890" of the pending transaction user card and the identification information "a" of the mobile terminal, and send a registration success response message to the mobile terminal. This is the same as that in step 302.

Step 403. A POS terminal sends a transaction request message to the server. In this case, a user does not enable a PIN-free service by using the mobile terminal, but directly uses the pending transaction user card to perform a transaction through card swiping. The POS terminal reads the identification information "1234567890" of the pending transaction user card, and prompts the user to enter a PIN. In this case, the user may randomly enter one to six digits as the PIN, or may enter no PIN. The POS terminal generates the transaction request message based on the identification information "1234567890" of the pending transaction user card and the PIN (if the user enters the PIN), and sends the transaction request message to the server. This is the same as that in step 305.

Step 404. After determining, based on the transaction request message, that PIN verification for a pending transaction user card fails, the server may find, based on identification information of the pending transaction user card in the transaction request message, a mobile terminal that is corresponding to the identification information of the pending transaction user card and that is in registration information, and send a transaction confirmation message to the mobile terminal. The transaction confirmation message may include the identification information of the pending transaction user card, a transaction amount, and the like.

In this application, the transaction confirmation message may include a plurality of types of content. For example, the transaction confirmation message may further include the following information: The PIN verification fails (a password is incorrect), the user needs to confirm whether to permit a transaction, and the like. The foregoing descriptions are only examples. Persons skilled in the art may set, based on an actual situation, content that may be included in the transaction confirmation message. This is not specifically limited in this application.

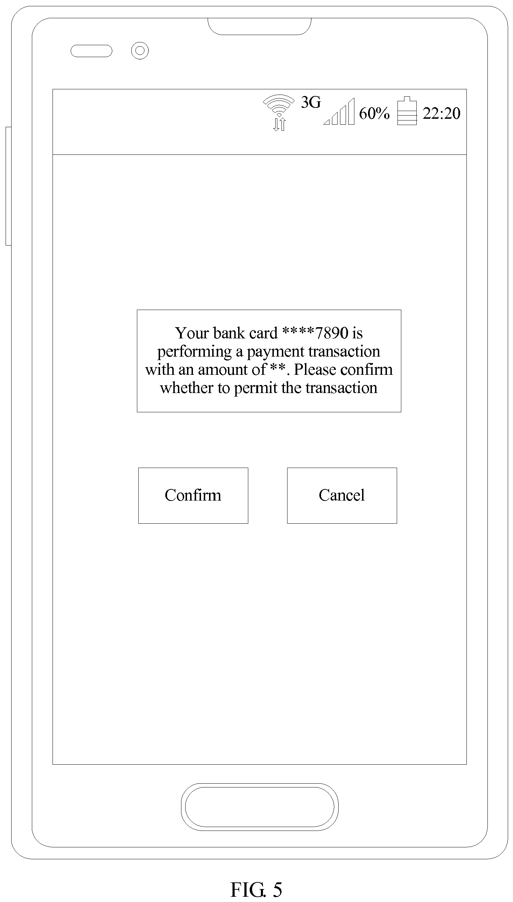

Step 405. The mobile terminal sends a permit transaction response message to the server. Specifically, after receiving the transaction confirmation message, the mobile terminal displays the transaction confirmation message to the user, and may specifically display partial or all content of the transaction confirmation message in a graphical interface. As shown in FIG. 5, FIG. 5 is a representation diagram of an example of the transaction confirmation message received by the mobile terminal. After determining that a payment transaction in the transaction confirmation message is performed by the user, the user taps a confirmation key on the mobile terminal. After determining that the user taps the confirmation key, the mobile terminal sends the permit transaction response message to the server.

Further, in this embodiment of the present invention, to determine that the user that taps the confirmation key is an authorized user, an identity of the user may further be verified before the user taps the confirmation key. For example, it may be set that the user enters some identity verification information and the mobile terminal verifies the identity verification information. If the verification succeeds, the user is permitted to tap the confirmation key on the mobile terminal.

Step 406. After receiving the permit transaction response message sent by the mobile terminal, the server determines that the pending transaction user card is a PIN-free user card, completes a transaction, and sends a transaction success response message to the mobile terminal and the POS terminal.

In the foregoing process, after determining that the PIN verification fails, the server sends the transaction confirmation message to the second terminal, and sets the pending transaction user card to a PIN-free user card after receiving the permit transaction response message, to permit the pending transaction user card to be used for transaction. Therefore, a transaction is performed through dynamic verification by using the second terminal.

It may be learned from the transaction processing methods shown in FIG. 3 and FIG. 4 that, in this application, the server receives the transaction request message of the pending transaction user card sent by the first terminal, and if determining that the PIN verification for the pending transaction user card fails, determines whether the server receives the first message of the second terminal. The first message is a PIN-free request message or a transaction response message. If receiving the first message of the second terminal, the server permits, based on the first message of the second terminal, the pending transaction user card to be used for transaction. It may be learned that, in this application, if determining that the PIN verification for the pending transaction user card fails, the server may determine whether the server receives the first message of the second terminal, and perform a PIN-free transaction on the pending transaction user card after receiving the first message of the second terminal. Therefore, when performing a transaction by using a user card, a user can complete the transaction even if the user cannot enter a correct PIN, and this reduces memory burden of remembering a PIN by the user, and effectively prevents the PIN from being peeped and stolen.

For the foregoing method procedures, this application further provides a terminal and a server. For specific content of the terminal and the server, refer to the foregoing method implementation.

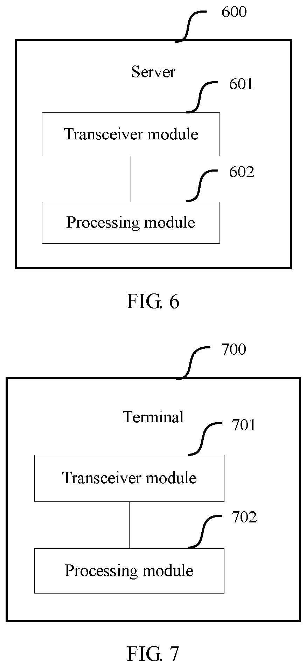

FIG. 6 is a schematic structural diagram of a server according to this application. As shown in FIG. 6, the server 600 includes a transceiver module 601 and a processing module 602.

The transceiver module 601 is configured to receive a transaction request message of a pending transaction user card sent by a first terminal.

The processing module 602 is configured to: if determining that personal identification number PIN verification for the pending transaction user card fails, determine whether a first message of a second terminal is received, where the first message is a PIN-free request message or a transaction response message; and if the first message of the second terminal is received, permit, based on the first message of the second terminal, the pending transaction user card to be used for transaction.

Optionally, the transaction request message includes identification information of the pending transaction user card and a PIN of the pending transaction user card entered by a user.

The processing module 602 is specifically configured to:
obtain, based on the identification information of the pending transaction user card, a prestored target PIN corresponding to the identification information of the pending transaction user card; and
compare the PIN in the transaction request message with the target PIN, and if the PIN is different from the target PIN, determine that the PIN verification for the pending transaction user card fails.

Optionally, the processing module 602 is specifically configured to:
if determining that the transaction request message does not include a PIN of the pending transaction user card, determine that the PIN verification for the pending transaction user card fails.

Optionally, the processing module 602 is specifically configured to:
set the pending transaction user card to a PIN-free user card based on the first message of the second terminal, to permit the pending transaction user card to be used for transaction.

Optionally, the first message is a PIN-free service request message.

The transceiver module 601 is further configured to:
receive a PIN-free service request message sent by the second terminal, where the PIN-free service request message includes the identification information of the pending transaction user card and identification information of the second terminal.

The processing module 602 is further configured to:
obtain, from registration information based on the identification information of the pending transaction user card, identification information that is of a second terminal and that is corresponding to the identification information of the pending transaction user card; and set the pending transaction user card to a PIN-free user card after determining that the identification information of the second terminal in the PIN-free service request message is the same as the identification information that is of a second terminal and that is corresponding to the identification information of the pending transaction user card.

Optionally, the first message is a permit transaction response message.

The processing module 602 is specifically configured to:
after determining that the personal identification number PIN verification for the pending transaction user card fails and determining, based on the identification information of the pending transaction user card included in the transaction request message, that a second terminal corresponding to the identification information of the pending transaction user card exists in registration information, send a transaction confirmation message to the second terminal by using the transceiver module 601;
receive, by using the transceiver module 601, a permit transaction response message sent by the second terminal based on the transaction confirmation message; and
set the pending transaction user card to a PIN-free user card based on the permit transaction response message.

Optionally, before setting the pending transaction user card to a PIN-free user card based on the first message of the second terminal, the processing module 602 is further configured to:
receive, by using the transceiver module 601, a PIN-free registration request message sent by the second terminal, where the PIN-free registration request message includes the identification information of the pending transaction user card and the identification information of the second terminal; and
determine the identification information of the pending transaction user card and the identification information of the second terminal as the registration information of the pending transaction user card, and return a registration success response message to the second terminal by using the transceiver module 601.

Optionally, the PIN-free registration request message further includes verification information.

Before determining the identification information of the pending transaction user card and the identification information of the second terminal as the registration information of the pending transaction user card, the processing module 602 is further configured to:
determine, based on the identification information of the pending transaction user card, that verification for the verification information succeeds.

Optionally, after the processing module 602 permits the pending transaction user card to be used for transaction, the transceiver module 601 is further configured to:
send a transaction response message to the first terminal and/or the second terminal, where the transaction response message includes a transaction result.

Optionally, the transceiver module 601 is further configured to:
receive a PIN-free disabling request message of the pending transaction user card sent by the second terminal.

The processing module 602 is further configured to:
set the pending transaction user card as a non-PIN-free user card based on the PIN-free disabling request message.

In this application, if determining that the PIN verification for the pending transaction user card fails, the server may determine whether the server receives the first message of the second terminal, and perform a PIN-free transaction on the pending transaction user card after receiving the first message of the second terminal. Therefore, when performing a transaction by using a user card, a user can complete the transaction even if the user cannot enter a correct PIN, and this reduces memory burden of remembering a PIN by the user, and effectively prevents the PIN from being peeped and stolen.

FIG. 7 is a schematic structural diagram of a terminal according to this application. As shown in FIG. 7, the terminal 700 includes a transceiver module 701 and a processing module 702.

The processing module 702 is configured to: send a first message to a server by using the transceiver module 701, where the first message is used by the server to: if determining that personal identification number PIN verification for the pending transaction user card fails, permit, based on the first message, the pending transaction user card to be used for transaction; and receive, by using the transceiver module 701, a PIN-free service response message sent by the server, where the PIN-free service response message is used by the server to notify the second terminal that the pending transaction user card is set to a PIN-free user card.

Optionally, the first message is a permit transaction response message, and before sending the first message to the server, the transceiver module 701 is further configured to:
receive a transaction confirmation message sent by the server after the server determines that the PIN verification for the pending transaction user card fails.

Optionally, the first message is a PIN-free service request message, the first message includes identification information of the pending transaction user card and identification information of the second terminal, and the first message is used by the server to set the pending transaction user card to a PIN-free user card based on the identification information of the pending transaction user card and the identification information of the second terminal, to permit the pending transaction user card to be used for transaction.

Optionally, before sending the first message to the server, the transceiver module 701 is further configured to:
send a PIN-free registration request message to the server, where the PIN-free registration request message includes the identification information of the pending transaction user card and the identification information of the second terminal, and the registration request message is used by the server to: determine the identification information of the pending transaction user card and the identification information of the second terminal as registration information of the pending transaction user card, and return a registration success response message to the second terminal; and
receive the registration success response message returned by the server based on the registration request message.

Optionally, the PIN-free service response message includes validity limitation information of a PIN-free transaction of the pending transaction user card.

Optionally, after sending the first message to the server, the transceiver module 701 is further configured to:
send a PIN-free disabling request message of the pending transaction user card to the server, where the PIN-free disabling request message is used by the server to set the pending transaction user card as a non-PIN-free user card based on the PIN-free disabling request message.

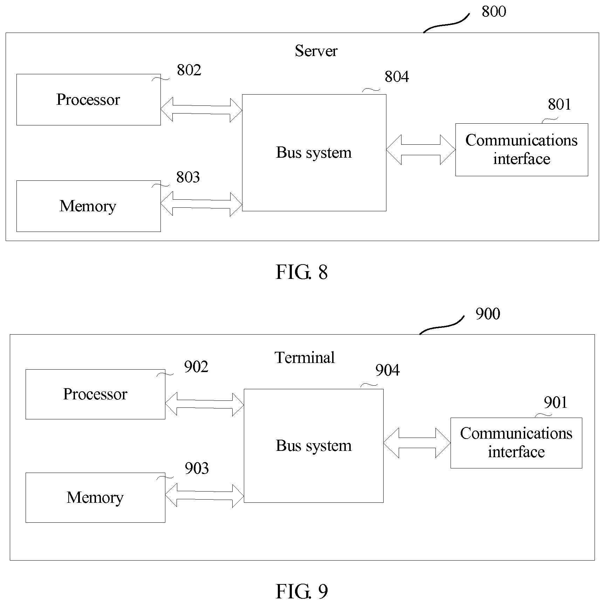

Based on a same concept, FIG. 8 is a schematic structural diagram of another server according to an embodiment of the present invention. As shown in FIG. 8, the server 800 includes a communications interface 801, a processor 802, a memory 803, and a bus system 804.

The memory 803 is configured to store a program. Specifically, the program may include program code, and the program code includes a computer operation instruction. The memory 803 may be a random access memory (random access memory, RAM for short), or may be a non-volatile memory (non-volatile memory), for example, at least one magnetic disk memory. Only one memory is shown in the figure. Certainly, a plurality of memories may be provided as required. The memory 803 may be a memory in the processor 802.

The memory 803 stores the following elements: an executable module or a data structure, a subset thereof, or an extended set thereof;
an operation instruction, including various operation instructions and used to implement various operations; and
an operating system, including various system programs and used to implement various basic services and process a hardware-based task.

The processor 802 controls an operation of the server 800, and the processor 802 may further be referred to as a CPU (Central Processing Unit, central processing unit). In specific application, all components of the server 800 are coupled together by using the bus system 804, and the bus system 804 may include a power bus, a control bus, a status signal bus, and the like in addition to a data bus. However, for clarity of description, various buses are marked as the bus system 804 in the figure. For ease of illustration, FIG. 8 shows only an example of the bus system 804.

The methods disclosed in the foregoing embodiments of this application may be applied to the processor 802, or may be implemented by the processor 802. The processor 802 may be an integrated circuit chip and has a signal processing capability. In an implementation process, the steps in the foregoing methods may be completed by using a hardware integrated logic circuit in the processor 802 or an instruction in a form of software. The processor 802 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor 802 may implement or perform the methods, the steps, and the logical block diagrams disclosed in the embodiments of this application. The general purpose processor may be a microprocessor, or the processor may be any conventional processor, or the like. The steps of the methods disclosed in the embodiments of this application may be directly performed by a hardware decoding processor, or performed by a combination of hardware in a decoding processor and a software module. The software module may be located in a mature storage medium in the art, such as a random access memory, a flash memory, a read-only memory, a programmable read-only memory or an electrically erasable programmable memory, or a register. The storage medium is located in the memory 803. The processor 802 reads information in the memory 803, and performs the following steps in combination with hardware of the processor:
receiving, by using the communications interface 801, a transaction request message of a pending transaction user card sent by a first terminal; and
if determining that personal identification number PIN verification for the pending transaction user card fails, determining whether a first message of a second terminal is received, where the first message is a PIN-free service request message or a permit transaction response message; and if the first message of the second terminal is received, permitting, based on the first message of the second terminal, the pending transaction user card to be used for transaction.

Optionally, the transaction request message includes identification information of the pending transaction user card and a PIN of the pending transaction user card entered by a user.

The processor 802 is specifically configured to:
obtain, based on the identification information of the pending transaction user card, a prestored target PIN corresponding to the identification information of the pending transaction user card; and
compare the PIN in the transaction request message with the target PIN, and if the PIN is different from the target PIN, determine that the PIN verification for the pending transaction user card fails.

Optionally, the processor 802 is specifically configured to:
if determining that the transaction request message does not include a PIN of the pending transaction user card, determine that the PIN verification for the pending transaction user card fails.

Optionally, the first message is a PIN-free service request message.

The communications interface 801 is further configured to:
receive a PIN-free service request message sent by the second terminal, where the PIN-free service request message includes the identification information of the pending transaction user card and identification information of the second terminal.

The processor 802 is further configured to:
obtain, from registration information based on the identification information of the pending transaction user card, identification information that is of a second terminal and that is corresponding to the identification information of the pending transaction user card; and set the pending transaction user card to a PIN-free user card after determining that the identification information of the second terminal in the PIN-free service request message is the same as the identification information that is of a second terminal and that is corresponding to the identification information of the pending transaction user card.

Optionally, the first message is a permit transaction response message.

The processor 802 is specifically configured to:
after determining that the personal identification number PIN verification for the pending transaction user card fails and determining, based on the identification information of the pending transaction user card included in the transaction request message, that a second terminal corresponding to the identification information of the pending transaction user card exists in registration information, send a transaction confirmation message to the second terminal by using the communications interface 801;
receive, by using the communications interface 801, a permit transaction response message sent by the second terminal based on the transaction confirmation message; and
set the pending transaction user card to a PIN-free user card based on the permit transaction response message.

Optionally, before setting the pending transaction user card to a PIN-free user card based on the first message of the second terminal, the processor 802 is further configured to:
receive, by using the communications interface, a PIN-free registration request message sent by the second terminal, where the PIN-free registration request message includes the identification information of the pending transaction user card and the identification information of the second terminal; and
determine the identification information of the pending transaction user card and the identification information of the second terminal as the registration information of the pending transaction user card, and return a registration success response message to the second terminal by using the communications interface.

Optionally, the PIN-free registration request message further includes verification information.

Before determining the identification information of the pending transaction user card and the identification information of the second terminal as the registration information of the pending transaction user card, the processor 802 is further configured to:
determine, based on the identification information of the pending transaction user card, that verification for the verification information succeeds.

Optionally, after the processor 802 permits the pending transaction user card to be used for transaction, the communications interface 801 is further configured to:
send a transaction response message to the first terminal and/or the second terminal, where the transaction response message includes a transaction result.

Optionally, the communications interface 801 is further configured to:
receive a PIN-free disabling request message of the pending transaction user card sent by the second terminal.

The processor 802 is further configured to:
set the pending transaction user card as a non-PIN-free user card based on the PIN-free disabling request message.

FIG. 9 is a schematic structural diagram of another terminal according to an embodiment of the present invention. As shown in FIG. 9, the terminal 900 includes a communications interface 901, a processor 902, a memory 903, and a bus system 904.

The memory 903 is configured to store a program. Specifically, the program may include program code, and the program code includes a computer operation instruction. The memory 903 may be a random access memory (random access memory, RAM for short), or may be a non-volatile memory (non-volatile memory), for example, at least one magnetic disk memory. Only one memory is shown in the figure. Certainly, a plurality of memories may be provided as required. The memory 903 may be a memory in the processor 902.

The memory 903 stores the following elements: an executable module or a data structure, a subset thereof, or an extended set thereof;
an operation instruction, including various operation instructions and used to implement various operations; and
an operating system, including various system programs and used to implement various basic services and process a hardware-based task.

The processor 902 controls an operation of the terminal 900, and the processor 902 may further be referred to as a CPU (Central Processing Unit, central processing unit). In specific application, all components of the terminal 900 are coupled together by using the bus system 904, and the bus system 904 may include a power bus, a control bus, a status signal bus, and the like in addition to a data bus. However, for clarity of description, various buses are marked as the bus system 904 in the figure. For ease of illustration, FIG. 9 shows only an example of the bus system 904.

The methods disclosed in the foregoing embodiments of this application may be applied to the processor 902, or may be implemented by the processor 902. The processor 902 may be an integrated circuit chip and has a signal processing capability. In an implementation process, the steps in the foregoing methods may be completed by using a hardware integrated logic circuit in the processor 902 or an instruction in a form of software. The processor 902 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor 902 may implement or perform the methods, the steps, and the logical block diagrams disclosed in the embodiments of this application. The general purpose processor may be a microprocessor, or the processor may be any conventional processor, or the like. The steps of the methods disclosed in the embodiments of this application may be directly performed by a hardware decoding processor, or performed by a combination of hardware in a decoding processor and a software module. The software module may be located in a mature storage medium in the art, such as a random access memory, a flash memory, a read-only memory, a programmable read-only memory or an electrically erasable programmable memory, or a register. The storage medium is located in the memory 903. The processor 902 reads information in the memory 903, and performs the following steps in combination with hardware of the processor:
sending a first message to a server by using the communications interface 901, where the first message is used by the server to: if determining that personal identification number PIN verification for the pending transaction user card fails, permit, based on the first message, the pending transaction user card to be used for transaction; and receiving, by using the communications interface 901, a PIN-free service response message sent by the server, where the PIN-free service response message is used by the server to notify the second terminal that the pending transaction user card is set to a PIN-free user card.

Optionally, the first message is a permit transaction response message, and before sending the first message to the server, the communications interface 901 is further configured to:
receive a transaction confirmation message sent by the server after the server determines that the PIN verification for the pending transaction user card fails.

Optionally, the first message is a PIN-free service request message, the first message further includes identification information of the second terminal, and the first message is used by the server to set the pending transaction user card to a PIN-free user card based on identification information of the pending transaction user card and the identification information of the second terminal.

Optionally, before sending the first message to the server, the communications interface 901 is further configured to:
send a PIN-free registration request message to the server, where the PIN-free registration request message includes verification information, the identification information of the pending transaction user card, and the identification information of the second terminal, and the registration request message is used by the server to: determine the identification information of the pending transaction user card and the identification information of the second terminal as registration information of the pending transaction user card, and return a registration success response message to the second terminal; and
receive the registration success response message returned by the server based on the registration request message.

Optionally, the PIN-free service response message includes validity limitation information of a PIN-free transaction of the pending transaction user card.

Optionally, after sending the first message to the server, the communications interface 901 is further configured to:
send a PIN-free disabling request message of the pending transaction user card to the server, where the PIN-free disabling request message is used by the server to set the pending transaction user card as a non-PIN-free user card based on the PIN-free disabling request message.

It may be learned from the foregoing content that, in this application, the server receives the transaction request message of the pending transaction user card sent by the first terminal, and if determining that the PIN verification for the pending transaction user card fails, determines whether the server receives the first message of the second terminal. The first message is a PIN-free request message or a transaction response message. If receiving the first message of the second terminal, the server permits, based on the first message of the second terminal, the pending transaction user card to be used for transaction. It may be learned that, in this application, if determining that the PIN verification for the pending transaction user card fails, the server may determine whether the server receives the first message of the second terminal, and perform a PIN-free transaction on the pending transaction user card after receiving the first message of the second terminal. Therefore, when performing a transaction by using a user card, a user can complete the transaction even if the user cannot enter a correct PIN, and this reduces memory burden of remembering a PIN by the user, and effectively prevents the PIN from being peeped and stolen.

Persons skilled in the art should understand that the embodiments of this application may be provided as a method or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Obviously, persons skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A transaction processing method, wherein the method comprises:
receiving, by a server, a transaction request message of a pending transaction user card sent by a first terminal; and
if determining that personal identification number PIN verification for the pending transaction user card fails, determining, by the server, whether the server receives a first message of a second terminal, wherein the first message is a PIN-free service request message or a permit transaction response message; and if receiving the first message of the second terminal, permitting, by the server based on the first message of the second terminal, the pending transaction user card to be used for transaction.

2. The method according to claim 1, wherein the transaction request message comprises identification information of the pending transaction user card and a PIN of the pending transaction user card entered by a user; and
the determining, by the server, that PIN verification for the pending transaction user card fails comprises:
obtaining, by the server based on the identification information of the pending transaction user card, a prestored target PIN corresponding to the identification information of the pending transaction user card; and
comparing, by the server, the PIN in the transaction request message with the target PIN, and if the PIN is different from the target PIN, determining that the PIN verification for the pending transaction user card fails.

3. The method according to claim 1, wherein the determining, by the server, that PIN verification for the pending transaction user card fails comprises:
determining, by the server, that the transaction request message does not comprise a PIN of the pending transaction user card.

4. The method according to any one of claims 1 to 3, wherein the permitting, by the server based on the first message of the second terminal, the pending transaction user card to be used for transaction specifically comprises:
setting, by the server, the pending transaction user card to a PIN-free user card based on the first message of the second terminal, to permit the pending transaction user card to be used for transaction.

5. The method according to claim 4, wherein the first message is a PIN-free service request message; and
the setting, by the server, the pending transaction user card to a PIN-free user card based on the first message of the second terminal specifically comprises:
receiving, by the server, a PIN-free service request message sent by the second terminal, wherein the PIN-free service request message comprises the identification information of the pending transaction user card and identification information of the second terminal;
obtaining, by the server from registration information based on the identification information of the pending transaction user card, identification information that is of a second terminal and that is corresponding to the identification information of the pending transaction user card; and
setting, by the server, the pending transaction user card to a PIN-free user card after determining that the identification information of the second terminal in the PIN-free service request message is the same as the identification information that is of a second terminal and that is corresponding to the identification information of the pending transaction user card.

6. The method according to claim 4, wherein the first message is a permit transaction response message; and
the setting, by the server, the pending transaction user card to a PIN-free user card based on the first message of the second terminal specifically comprises:
after determining that the personal identification number PIN verification for the pending transaction user card fails, sending, by the server, a transaction confirmation message to the second terminal after determining, based on the identification information of the pending transaction user card comprised in the transaction request message, that a second terminal corresponding to the identification information of the pending transaction user card exists in registration information;
receiving, by the server, a permit transaction response message sent by the second terminal based on the transaction confirmation message; and
setting, by the server, the pending transaction user card to a PIN-free user card based on the permit transaction response message.

7. The method according to any one of claims 4 to 6, wherein before the setting, by the server, the pending transaction user card to a PIN-free user card based on the first message of the second terminal, the method further comprises:
receiving, by the server, a PIN-free registration request message sent by the second terminal, wherein the PIN-free registration request message comprises the identification information of the pending transaction user card and the identification information of the second terminal; and
determining, by the server, the identification information of the pending transaction user card and the identification information of the second terminal as the registration information of the pending transaction user card, and returning a registration success response message to the second terminal.

8. The method according to claim 7, wherein the PIN-free registration request message further comprises verification information; and
before the determining, by the server, the identification information of the pending transaction user card and the identification information of the second terminal as the registration information of the pending transaction user card, the method further comprises:
determining, by the server based on the identification information of the pending transaction user card, that verification for the verification information succeeds.

9. The method according to any one of claims 1 to 8, wherein after the permitting, by the server, the pending transaction user card to be used for transaction, the method further comprises:
receiving, by the server, a PIN-free disabling request message of the pending transaction user card sent by the second terminal; and
setting, by the server, the pending transaction user card as a non-PIN-free user card based on the PIN-free disabling request message.

10. A transaction processing method, wherein the method comprises:
sending, by a second terminal, a first message to a server, wherein the first message is used by the server to: if determining that personal identification number PIN verification for the pending transaction user card fails, permit, based on the first message, the pending transaction user card to be used for transaction; and
receiving, by the second terminal, a PIN-free service response message sent by the server, wherein the PIN-free service response message is used by the server to notify the second terminal that the pending transaction user card is set to a PIN-free user card.

11. The method according to claim 10, wherein the first message is a permit transaction response message, and before the sending, by a second terminal, a first message to a server, the method further comprises:
receiving, by the second terminal, a transaction confirmation message sent by the server after the server determines that the PIN verification for the pending transaction user card fails.

12. The method according to claim 10, wherein the first message is a PIN-free service request message, the first message comprises identification information of the pending transaction user card and identification information of the second terminal, and the first message is used by the server to set the pending transaction user card to a PIN-free user card based on the identification information of the pending transaction user card and the identification information of the second terminal, to permit the pending transaction user card to be used for transaction.

13. The method according to any one of claims 10 to 12, wherein before the sending, by a second terminal, a first message to a server, the method further comprises:
sending, by the second terminal, a PIN-free registration request message to the server, wherein the PIN-free registration request message comprises the identification information of the pending transaction user card and the identification information of the second terminal, and the registration request message is used by the server to: determine the identification information of the pending transaction user card and the identification information of the second terminal as registration information of the pending transaction user card, and return a registration success response message to the second terminal; and
receiving, by the second terminal, the registration success response message returned by the server based on the registration request message.

14. The method according to any one of claims 10 to 13, wherein the PIN-free service response message comprises validity limitation information of a PIN-free transaction of the pending transaction user card.

15. The method according to any one of claims 10 to 14, wherein after the sending, by a second terminal, a first message to a server, the method further comprises:
sending, by the second terminal, a PIN-free disabling request message of the pending transaction user card to the server, wherein the PIN-free disabling request message is used by the server to set the pending transaction user card as a non-PIN-free user card based on the PIN-free disabling request message.

16. A server, wherein the server comprises a communications interface and a processor;
the communications interface is configured to receive a transaction request message of a pending transaction user card sent by a first terminal; and
the processor is configured to: if determining that personal identification number PIN verification for the pending transaction user card fails, determine whether a first message of a second terminal is received, wherein the first message is a PIN-free service request message or a permit transaction response message; and if the first message of the second terminal is received, permit, based on the first message of the second terminal, the pending transaction user card to be used for transaction.

17. The server according to claim 16, wherein the transaction request message comprises identification information of the pending transaction user card and a PIN of the pending transaction user card entered by a user; and
the processor is specifically configured to:
obtain, based on the identification information of the pending transaction user card, a prestored target PIN corresponding to the identification information of the pending transaction user card; and
compare the PIN in the transaction request message with the target PIN, and if the PIN is different from the target PIN, determine that the PIN verification for the pending transaction user card fails.

18. The server according to claim 16, wherein the processor is specifically configured to:
if determining that the transaction request message does not comprise a PIN of the pending transaction user card, determine that the PIN verification for the pending transaction user card fails.

19. The server according to any one of claims 16 to 18, wherein the processor is specifically configured to:
set the pending transaction user card to a PIN-free user card based on the first message of the second terminal, to permit the pending transaction user card to be used for transaction.

20. The server according to claim 19, wherein the first message is a PIN-free service request message;
the communications interface is further configured to:
receive a PIN-free service request message sent by the second terminal, wherein the PIN-free service request message comprises the identification information of the pending transaction user card and identification information of the second terminal; and
the processor is further configured to:
obtain, from registration information based on the identification information of the pending transaction user card, identification information that is of a second terminal and that is corresponding to the identification information of the pending transaction user card; and set the pending transaction user card to a PIN-free user card after determining that the identification information of the second terminal in the PIN-free service request message is the same as the identification information that is of a second terminal and that is corresponding to the identification information of the pending transaction user card.

21. The server according to claim 19, wherein the first message is a permit transaction response message; and
the processor is specifically configured to:
after determining that the personal identification number PIN verification for the pending transaction user card fails and determining, based on the identification information of the pending transaction user card comprised in the transaction request message, that a second terminal corresponding to the identification information of the pending transaction user card exists in registration information, send a transaction confirmation message to the second terminal by using the communications interface;
receive, by using the communications interface, a permit transaction response message sent by the second terminal based on the transaction confirmation message; and
set the pending transaction user card to a PIN-free user card based on the permit transaction response message.

22. The server according to any one of claims 19 to 20, wherein before setting the pending transaction user card to a PIN-free user card based on the first message of the second terminal, the processor is further configured to:
receive, by using the communications interface, a PIN-free registration request message sent by the second terminal, wherein the PIN-free registration request message comprises the identification information of the pending transaction user card and the identification information of the second terminal; and
determine the identification information of the pending transaction user card and the identification information of the second terminal as the registration information of the pending transaction user card, and return a registration success response message to the second terminal by using the communications interface.

23. The server according to claim 22, wherein the PIN-free registration request message further comprises verification information; and
before determining the identification information of the pending transaction user card and the identification information of the second terminal as the registration information of the pending transaction user card, the processor is further configured to:
determine, based on the identification information of the pending transaction user card, that verification for the verification information succeeds.

24. The server according to any one of claims 16 to 22, wherein the communications interface is further configured to:
receive a PIN-free disabling request message of the pending transaction user card sent by the second terminal; and
the processor is further configured to:
set the pending transaction user card as a non-PIN-free user card based on the PIN-free disabling request message.

25. A terminal, wherein the terminal comprises a communications interface and a processor; and
the processor is configured to: send a first message to a server by using the communications interface, wherein the first message is used by the server to: if determining that personal identification number PIN verification for the pending transaction user card fails, permit, based on the first message, the pending transaction user card to be used for transaction; and receive, by using the communications interface, a PIN-free service response message sent by the server, wherein the PIN-free service response message is used by the server to notify the second terminal that the pending transaction user card is set to a PIN-free user card.

26. The terminal according to claim 25, wherein the first message is a permit transaction response message, and before sending the first message to the server, the communications interface is further configured to:
receive a transaction confirmation message sent by the server after the server determines that the PIN verification for the pending transaction user card fails.

27. The terminal according to claim 25, wherein the first message is a PIN-free service request message, the first message comprises identification information of the pending transaction user card and identification information of the second terminal, and the first message is used by the server to set the pending transaction user card to a PIN-free user card based on the identification information of the pending transaction user card and the identification information of the second terminal.

28. The terminal according to any one of claims 25 to 27, wherein before sending the first message to the server, the communications interface is further configured to:
send a PIN-free registration request message to the server, wherein the PIN-free registration request message comprises verification information, the identification information of the pending transaction user card, and the identification information of the second terminal, and the registration request message is used by the server to: after determining, based on the identification information of the pending transaction user card, that verification for the verification information succeeds, determine the identification information of the pending transaction user card and the identification information of the second terminal as registration information of the pending transaction user card, and return a registration success response message to the second terminal; and
receive the registration success response message returned by the server based on the registration request message.

29. The terminal according to any one of claims 25 to 28, wherein the PIN-free service response message comprises validity limitation information of a PIN-free transaction of the pending transaction user card.

30. The terminal according to any one of claims 25 to 29, wherein after sending the first message to the server, the communications interface is further configured to:
send a PIN-free disabling request message of the pending transaction user card to the server, wherein the PIN-free disabling request message is used by the server to set the pending transaction user card as a non-PIN-free user card based on the PIN-free disabling request message.
